# EUROPÄISCHE PATENTSCHRIFT

(11) **EP 3 253 613 B1**
(45) Veröffentlichungstag und Bekanntmachung des Hinweises auf die Patenterteilung: **09.10.2019**
(21) Anmeldenummer: 16700523.0
(22) Anmeldetag: 02.01.2016
(51) Int. Cl.: B60M 1/28, B61D 15/08

(54) **ARBEITSWAGEN ZUR UNTERHALTUNG EINER ELEKTRISCHEN FAHRLEITUNG**
WORK CAR FOR MAINTENANCE OF AN ELECTRICAL OVERHEAD LINE
WAGON DE SERVICE DESTINÉ À L'ENTRETIEN D'UNE LIGNE DE TRACTION ÉLECTRIQUE

(30) Priorität: 02.02.2015 AT 362015 U
(43) Veröffentlichungstag der Anmeldung: 13.12.2017
(73) Patentinhaber: Plasser & Theurer Export von Bahnbaumaschinen Gesellschaft m.b.H., 1010 Wien (AT)
(72) Erfinder: MATZINGER, Nikolaus, 4181 Oberneukirchen (AT)
(86) Internationale Anmeldenummer: PCT/EP2016/000002
(87) Internationale Veröffentlichungsnummer: WO 2016/124303

(56) Entgegenhaltungen:
- EP-A1- 0 667 316
- DE-C1- 19 957 356
- JP-A- 2000 335 407
- JP-A- 2001 063 561

## Beschreibung

Die Erfindung betrifft einen Arbeitswagen zur Unterhaltung einer elektrischen Fahrleitung mit einem auf Schienenfahrwerken abgestützten Wagenrahmen und einem auf diesem befindlichen Wagenaufbau, wobei an einem betreffend eine Wagenlängsrichtung ersten Wagenende eine erste Erdungseinrichtung und am gegenüberliegenden, zweiten Wagenende ein Kran mit einer höhen- und seitenverstellbaren Arbeitsbühne angeordnet sind.

Ein derartiger Arbeitswagen ist bereits aus EP 0 667 316 A1 bekannt. Auf einem auf Schienenfahrwerken abgestützten Wagenrahmen sind ein Wagenaufbau, eine auf einem Kranausleger angeordnete Arbeitsbühne sowie ein Fahrleitungsmessbügel angeordnet. Dieser kann auch zur Erdung der Fahrleitung eingesetzt werden.

Aus EP 0 479 764 A1 ist eine Maschine zur Kontrolle des Fahrdrahtes bekannt. Diese weist zwei Messvorrichtungen in Form eines Messbügels und eines Messrahmens auf.

Die Aufgabe der vorliegenden Erfindung liegt nun in der Schaffung eines Arbeitswagens der eingangs genannten Art, mit dem ein gefahrloses Arbeiten an der Fahrleitung möglich ist, ohne dass dabei die Manövrierfähigkeit der Arbeitsbühne beeinträchtigt wird.

Diese Aufgabe wird erfindungsgemäß mit einem Arbeitswagen der gattungsgemäßen Art durch die im Kennzeichen des Hauptanspruches angeführten Merkmale gelöst.

Ein derartig ausgebildeter Arbeitswagen gewährleistet optimale Sicherheit des Arbeitspersonals, sollte die Fahrleitung irrtümlich unter elektrischer Spannung stehen. Gemäß den Vorschriften ist die Fahrleitung bzw. der betreffende Abschnitt bei Arbeiten zu erden. Dies geschieht bei Arbeitswagen durch den als Erdungseinrichtung wirksamen Messbügel. Bei Arbeiten an zwei benachbarten, elektrisch voneinander getrennten Abschnitten einer Fahrleitung kann nun die Situation eintreten, dass sich der Messbügel in einem geerdeten Abschnitt befindet, die Arbeitsbühne sich aber bereits im nächsten - nicht durch den Messbügel geerdeten - Abschnitt befindet. Sollte dieser Abschnitt unter Spannung stehen, wäre das Personal extrem gefährdet. Durch eine erfindungsgemäße Anordnung einer zweiten Erdungseinrichtung kann diese Gefährdung zuverlässig ausgeschlossen werden, da beide Abschnitte geerdet sind.

Weitere Vorteile der Erfindung ergeben sich aus den Unteransprüchen und der Zeichnungsbeschreibung.

Im Folgenden wird die Erfindung anhand von in der Zeichnung dargestellten Ausführungsbeispielen näher beschrieben. Es zeigen: Fig. 1 eine schematische Seitenansicht eines Arbeitswagens, Fig. 2 und 3 eine vergrößerte Detailansicht bzw. eine Ansicht einer Erdungseinrichtung in Wagenlängsrichtung und Fig. 4 ein weiteres Ausführungsbeispiel einer Erdungseinrichtung.

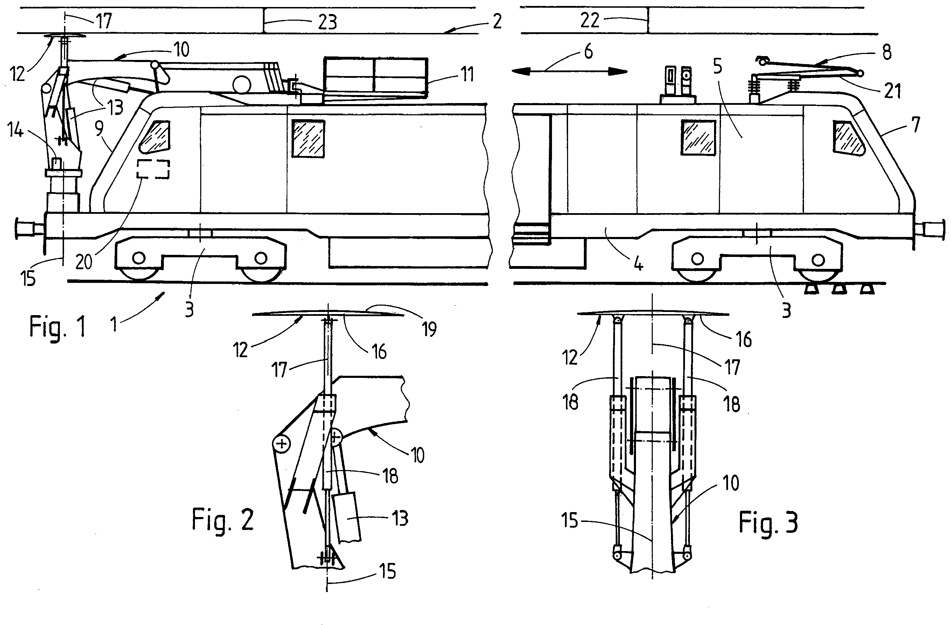

Ein in Fig. 1 dargestellter Arbeitswagen 1 zur Unterhaltung einer elektrischen Fahrleitung 2 besteht im Wesentlichen aus einem auf Schienenfahrwerken 3 abgestützten Wagenrahmen 4 und einem auf diesem befindlichen Wagenaufbau 5. An einem betreffend eine Wagenlängsrichtung 6 ersten Wagenende 7 ist eine erste Erdungseinrichtung 8 und am gegenüberliegenden, zweiten Wagenende 9 ist ein Kran 10 mit einer höhen- und seitenverstellbaren Arbeitsbühne 11 angeordnet. Am zweiten Wagenende 9 ist eine zweite Erdungseinrichtung 12 vorgesehen. Die Arbeitsbühne 11 ist durch am Kran 10 angeordnete Antriebe 13 höhen- und seitenverstellbar ausgebildet. Der Kran 10 ist durch einen Drehantrieb 14 um eine vertikale Drehachse 15 verdrehbar mit dem Wagenrahmen 4 verbunden.

Wie insbesondere in Fig. 2 und 3 ersichtlich ist, ist die am Kran 10 angeordnete zweite Erdungseinrichtung 12 als Kontaktplatte 16 ausgebildet, die eine vertikale Symmetrieachse 17 aufweist. Diese verläuft koaxial mit der vertikalen Drehachse 15 des Kranes 10. Die zweite Erdungseinrichtung 12 bzw. die Kontaktplatte 16 ist durch zwei am Kran 10 angelenkte und geführte Antriebe 18 höhenverstellbar ausgebildet. Vorteilhafterweise ist die Kontaktplatte 16 als kreisförmige Schleifplatte 19 ausgebildet.

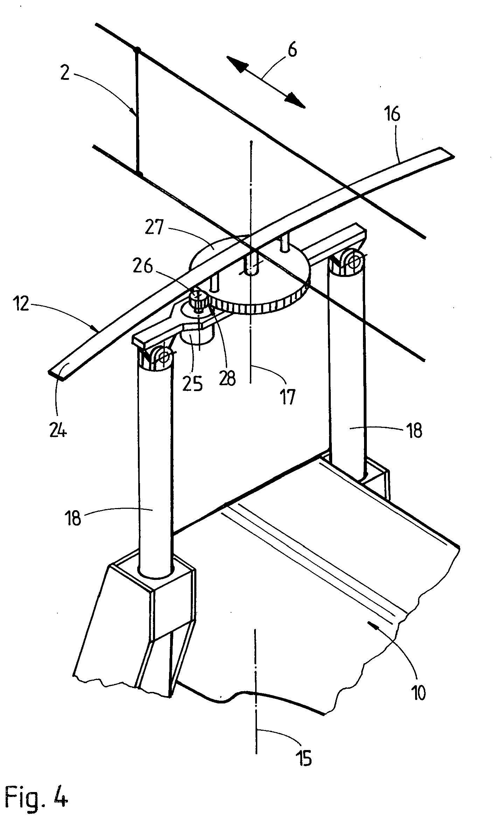

Die Kontaktplatte 16 der in Fig. 4 dargestellten Erdungseinrichtung 12 ist als quer zur Wagenlängsrichtung 6 verlaufende Schleifleiste 24 ausgebildet. Diese ist durch einen Antrieb 25 relativ gegenüber dem Kran 10 um die Symmetrieachse 17 drehbar ausgebildet. Der Antrieb 25 ist mit einem mindestens zwei Zahnräder 26, 27 aufweisenden Getriebe 28 verbunden. Die Schleifleiste 24 ist am eine Abtriebseite des Getriebes 28 bildenden Zahnrad 27 angeordnet. Der Antrieb 25 und der Drehantrieb 14 des Krans 10 sind mit einer Mess- und Steuereinheit 20 (Fig. 1) verbunden. Dadurch wird der Antrieb 25 automatisch so gesteuert, dass - unabhängig von der Drehung des Kranes 10 - die Schleifleiste 24 immer eine Position normal zur Wagenlängsrichtung 6 bzw. zur Fahrleitung 2 einnimmt.

Sowohl die zweite Erdungseinrichtung 12 als auch die erste Erdungseinrichtung 8 sind mit der Mess- und Steuereinheit 20 verbunden. Die erste Erdungseinrichtung 8 ist als höhenverstellbarer Messbügel 21 ausgebildet. Dadurch können die Erdungseinrichtungen 8, 12 auch für eine Vermessung der Fahrleitung 2 verwendet werden.

Im Folgenden wird der Einsatz des Arbeitswagens 1 kurz beschrieben. Bevor die Arbeitsbühne 11 zum Einsatz kommt oder durch Personal betreten wird, werden beide Erdungsvorrichtungen 8, 12 mit der Fahrleitung 2 in Kontakt gebracht. Erst dann dürfen die Arbeiten aufgenommen werden. Für effektives Arbeiten ist es erforderlich, dass der Arbeitswagen 1 mit ausgefahrener und besetzter Arbeitsbühne 11 verfahren wird. Dabei könnte es vorkommen, dass sich der Arbeitswagen 1 von einem spannungslosen und geerdeten ersten Abschnitt 22 in einen an diesen anschließenden zweiten Abschnitt 23 bewegt, welcher unter elektrischer Spannung steht. In diesem Fall wird durch die zweite Erdungseinrichtung 12 elektrischer Schluss hergestellt, wodurch im Unterwerk die Sicherung fällt und der zweite Abschnitt 23 spannungslos wird. Es kann somit zu keiner Gefährdung des Personals kommen.

## Patentansprüche

1. Arbeitswagen (1) zur Unterhaltung einer elektrischen Fahrleitung (2) mit einem auf Schienenfahrwerken (3) abgestützten Wagenrahmen (4) und einem auf diesem befindlichen Wagenaufbau (5), wobei an einem betreffend eine Wagenlängsrichtung (6) ersten Wagenende (7) eine erste Erdungseinrichtung (8) und am gegenüberliegenden, zweiten Wagenende (9) ein Kran (10) mit einer höhen- und seitenverstellbaren Arbeitsbühne (11) angeordnet sind, **dadurch gekennzeichnet, dass** am zweiten Wagenende (9) eine zweite Erdungseinrichtung (12) vorgesehen ist, die als am Kran (10) angeordnete Kontaktplatte (16) ausgebildet ist und eine vertikale Symmetrieachse (17) aufweist, welche koaxial mit einer vertikalen Drehachse (15) des Kranes (10) angeordnet ist.

2. Arbeitswagen nach Anspruch 1, **dadurch gekennzeichnet, dass** die zweite Erdungseinrichtung (12) durch mindestens einen Antrieb (18) höhenverstellbar ausgebildet ist.

3. Arbeitswagen nach Anspruch 1, **dadurch gekennzeichnet, dass** die Kontaktplatte (16) als kreisförmige Schleifplatte (19) ausgebildet ist.

4. Arbeitswagen nach einem der Ansprüche 1 oder 2, **dadurch gekennzeichnet, dass** die Kontaktplatte (16) als quer zur Wagenlängsrichtung (6) verlaufende Schleifleiste (24) ausgebildet ist, die durch einen Antrieb (25) relativ gegenüber dem Kran (10) um die Symmetrieachse (17) drehbar ausgebildet ist.

5. Arbeitswagen nach Anspruch 4, **dadurch gekennzeichnet, dass** der Antrieb (25) mit einem mindestens zwei Zahnräder (26, 27) aufweisenden Getriebe (28) verbunden ist, wobei die Schleifleiste (24) am eine Abtriebseite des Getriebes (28) bildenden Zahnrad (27) angeordnet ist.

6. Arbeitswagen nach Anspruch 5, **dadurch gekennzeichnet, dass** der Antrieb (25) und ein Drehantrieb (14) des Krans (10) mit einer Mess- und Steuereinheit (20) verbunden sind.

7. Arbeitswagen nach einem der Ansprüche 1 bis 6, **dadurch gekennzeichnet, dass** die zweite Erdungseinrichtung (12) mit der Mess- und Steuereinheit (20) verbunden ist.

8. Arbeitswagen nach einem der Ansprüche 1 bis 7, **dadurch gekennzeichnet, dass** die erste Erdungseinrichtung (8) als mit der Mess- und Steuereinheit (20) verbundener höhenverstellbarer Messbügel (21) ausgebildet ist.

## Claims

1. A work vehicle (1) for maintenance of an electrical catenary (2), including a vehicle frame (4) supported on on-track undercarriages (3) and a vehicle superstructure (5) situated thereon, wherein a first grounding device (8) is arranged at a first vehicle end (7), with regard to a longitudinal direction (6) of the vehicle, and a crane (10) having a vertically and transversely adjustable work platform (11) is arranged at the opposite, second vehicle end (9), **characterized in that**, at the second vehicle end (9), a second grounding device (12) is provided which is configured as a contact plate (16) arranged on the crane (10) and has a vertical axis of symmetry (17) which is arranged coaxially to a vertical axis of rotation (15) of the crane (10).

2. A work vehicle according to claim 1, **characterized in that** the second grounding device (12) is designed for vertical adjustment by means of at least one drive (18).

3. A work vehicle according to claim 1, **characterized in that** the contact plate (16) is configured as a circular sliding plate (19).

4. A work vehicle according to one of claims 1 or 2, **characterized in that** the contact plate (16) is configured as a sliding strip (24), extending transversely to the longitudinal direction (6) of the vehicle, which is designed to be rotatable about the axis of symmetry (17) relative to the crane (10) by means of a drive (25).

5. A work vehicle according to claim 4, **characterized in that** the drive (25) is connected to a gear unit (28) having at least two gearwheels (26, 27), wherein the sliding strip (24) is arranged at the gearwheel (27) which forms an output side of the gear unit (28).

6. A work vehicle according to claim 5, **characterized in that** the drive (25) and a rotation drive (14) of the crane (10) are connected to a measuring- and controlling unit (20).

7. A work vehicle according to one of claims 1 to 6, **characterized in that** the second grounding device (12) is connected to the measuring- and controlling unit (20).

8. A work vehicle according to one of claims 1 to 7, **characterized in that** the first grounding device (8) is designed as a vertically adjustable measuring bow (21) connected to the measuring- and controlling unit (20).

## Revendications

1. Wagon de chantier (1) pour l'entretien d'une ligne de contact électrique (2) avec un châssis de wagon (4) appuyé sur des mécanismes de roulement ferroviaires (3) et une superstructure (5) se trouvant sur celui-ci, dans lequel un premier dispositif de mise à la terre (8) est disposé à une première extrémité de wagon (7) par rapport à une direction longitudinale de wagon (6) et une grue (10) avec une plate-forme de travail (11) réglable en hauteur et latéralement est disposée à la seconde extrémité de wagon opposée (9), **caractérisé en ce qu'**un second dispositif de mise à la terre (12) qui est réalisé en tant que plaque de contact (16) disposée sur la grue (10) et présente un axe de symétrie vertical (17) qui est disposé de manière coaxiale avec un axe de rotation vertical (15) de la grue (10) est prévu sur la seconde extrémité de wagon (9).

2. Wagon de chantier selon la revendication 1, **caractérisé en ce que** le second dispositif de mise à la terre (12) est réalisé de manière réglable en hauteur par au moins un entraînement (18).

3. Wagon de chantier selon la revendication 1, **caractérisé en ce que** la plaque de contact (16) est réalisée en tant que plaque de frottement circulaire (19).

4. Wagon de chantier selon une des revendications 1 ou 2,
**caractérisé en ce que**
la plaque de contact (16) est réalisée en tant que baguette de frottement (24) s'étendant transversalement à la direction longitudinale de wagon (6) qui est réalisée de manière rotative autour de l'axe de symétrie (17) par rapport à la grue (10) par un entraînement (25).

5. Wagon de chantier selon la revendication 4, **caractérisé en ce que** l'entraînement (25) est connecté à un engrenage (28) présentant au moins deux roues dentées (26, 27), dans lequel la baguette de frottement (24) est disposée sur la roue dentée (27) formant un côté d'entraînement de l'engrenage (28).

6. Wagon de chantier selon la revendication 5, **caractérisé en ce que** l'entraînement(25) et un entraînement rotatif (14) de la grue (10) sont connectés à un module de mesure et de commande (20).

7. Wagon de chantier selon une des revendications 1 à 6, **caractérisé en ce que** le second dispositif de mise à la terre (12) est connecté au module de mesure et de commande (20).

8. Wagon de chantier selon une des revendications 1 à 7, **caractérisé en ce que** le premier dispositif de mise à la terre (8) est réalisé en tant qu'arceau de mesure (21) réglable en hauteur, connecté au module de mesure et de commande (20).
